(19) Europäisches Patentamt
European Patent Office
Office européen des brevets

(11) EP 4 155 346 A1

(12) EUROPEAN PATENT APPLICATION

(43) Date of publication:
**29.03.2023 Bulletin 2023/13**

(21) Application number: **22183745.3**

(22) Date of filing: **08.07.2022**

(51) International Patent Classification (IPC):
***C08L 9/00*** (2006.01) ***B60C 1/00*** (2006.01)
***C08L 9/06*** (2006.01) ***C08L 53/02*** (2006.01)
***C08L 75/04*** (2006.01) ***B60C 11/00*** (2006.01)

(52) Cooperative Patent Classification (CPC):
(C-Sets available)
**C08L 9/06; B60C 1/0016; B60C 11/00; B60C 11/0008; C08L 9/00; C08L 53/02; C08L 53/025; C08L 75/04** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.08.2021 JP 2021128569**

(71) Applicant: **Sumitomo Rubber Industries, Ltd.**
**Kobe-shi, Hyogo-ken 651-0072 (JP)**

(72) Inventor: **NAKATANI, Masako**
**Kobe-shi, Hyogo, 651-0072 (JP)**

(74) Representative: **Manitz Finsterwald**
**Patent- und Rechtsanwaltspartnerschaft mbB**
**Martin-Greif-Strasse 1**
**80336 München (DE)**

# (54) TIRE

(57) It is an object of the present invention to provide a tire that can improve in ride comfort while being lightweight. Provided is a tire comprising a tread part and a sidewall part, wherein, when a thickness of a tread rubber of the tread part at a tire equator is defined as T (mm), a thickness of a sidewall rubber of the sidewall part at a tire maximum width position is defined as S (mm), a tire weight is defined as G (kg), and the maximum load capacity of the tire is defined as WL (kg), T, S, G, and WL satisfy the following inequality (1) to (3), and wherein a rubber composition of the tread rubber comprises less than 100 parts by mass of a thermoplastic elastomer based on 100 parts by mass of a rubber component:

Inequality (1): $T \leq 8.5$

Inequality (2): $S/T < 0.50$

Inequality (3): $G/WL \leq 0.012$

EP 4 155 346 A1

(52) Cooperative Patent Classification (CPC): (Cont.)

C-Sets
**C08L 9/06, C08K 3/36, C08L 9/00, C08L 9/06, C08L 53/02;**
**C08L 9/06, C08K 3/36, C08L 9/00, C08L 9/06, C08L 53/025;**
**C08L 9/06, C08K 3/36, C08L 9/00, C08L 9/06, C08L 75/04**

## Description

TECHNICAL FIELD

The present invention relates to a tire having improved ride comfort.

BACKGROUND OF THE INVENTION

A pneumatic tire has been required to be reduced in weight from the viewpoint of improving fuel efficiency. JP 2017-043281 A describes a given tire having reduced rubber volume for weight reduction.

SUMMARY OF THE INVENTION

However, the lightweight tire having reduced rubber volume has a problem that it is difficult to obtain a satisfactory ride comfort.

It is an object of the present invention to provide a tire that can improve in ride comfort while being lightweight.

As a result of intensive studies, the present inventor has found that the above-described problem can be solved by, in a lightweight tire in which a ratio of a tire weight to the maximum load capacity of the tire is set to a predetermined value or less, setting a thickness of a tread rubber to a predetermined value or less, accordingly making a predetermined adjustment so that a thickness of a sidewall rubber does not become too thick, and further compounding a predetermined amount of a thermoplastic elastomer in a rubber composition of the tread rubber, and conducted further studies to complete the present invention.

That is, the present invention relates to a tire as follows.

A tire comprising a tread part and a sidewall part,

wherein, when a thickness of a tread rubber of the tread part at a tire equator is defined as T (mm), a thickness of a sidewall rubber of the sidewall part at a tire maximum width position is defined as S (mm), a tire weight is defined as G (kg), and the maximum load capacity of the tire is defined as WL (kg), T, S, G, and WL satisfy the following inequality (1) to (3), and

wherein a rubber composition of the tread rubber comprises less than 100 parts by mass of a thermoplastic elastomer based on 100 parts by mass of a rubber component:

$$\text{Inequality (1): } T \leq 8.5$$

$$\text{Inequality (2): } S/T < 0.50$$

$$\text{Inequality (3): } G/WL \leq 0.012$$

The tire of the present invention can improve in ride comfort while being lightweight.

BRIEF DESCRIPTION OF THE DRAWINGS

FIG. 1 is an example of a cross-sectional view of a tire, showing a thickness T (mm) of a tread rubber at a tire equator and a thickness S (mm) of a sidewall rubber at a tire maximum width position.

FIG. 2 is an example of a cross-sectional view of the tire, showing a tire cross-sectional width Wt, a tire cross-sectional height Ht, and a tire outer diameter Dt.

DETAILED DESCRIPTION

In the present invention, numerical values of upper limits and lower limits relating to "or more", "or less", and "to" for descriptions of numerical ranges are numerical values that can be arbitrarily combined, and additionally, numerical values in Examples can be combined with the upper limits and the lower limits. In addition, when a numerical range is specified by using "to", it means to include numerical values of both ends, unless otherwise specified. Furthermore, in

the present invention, the numerical range shown to include the values of both ends is interpreted as simultaneously showing a numerical range not including the value of one end among the values of both ends, and further, a numerical range not including both values of both ends, unless contrary to the purpose of the present invention.

The tire that is one embodiment of the present invention comprises a tread part and a sidewall part, wherein, when a thickness of a tread rubber of the tread part at a tire equator is defined as T (mm), a thickness of a sidewall rubber of the sidewall part at a tire maximum width position is defined as S (mm), a tire weight is defined as G (kg), and the maximum load capacity of the tire is defined as WL (kg), T, S, G, and WL satisfy the following inequality (1) to (3), and wherein a rubber composition of the tread rubber comprises less than 100 parts by mass of a thermoplastic elastomer based on 100 parts by mass of a rubber component:

$$\text{Inequality (1): } T \leq 8.5$$

$$\text{Inequality (2): } S/T < 0.50$$

$$\text{Inequality (3): } G/WL \leq 0.012$$

Although it is not intended to be bound by theory, in the present invention, the following can be considered as a mechanism capable of improving ride comfort while being lightweight. That is, the tire of the present invention has features that (1) since the tire has a ratio (G/WL) of a tire weight G (kg) to the maximum load capacity WL (kg) of the tire is 0.012 or less and is relatively lightweight, it has less heat generation, and since the thickness of the tread rubber is thin, the tire is less likely to accumulate heat in the tread, (2) since the tire is restricted so that the thickness of the sidewall rubber is made thin in accordance with the thickness of the tread rubber, heat dissipation develops also from the sidewall, thereby making heat further less likely to be accumulated in the tread, (3) since the rubber composition of the tread rubber comprises a thermoplastic elastomer, a supple and tough domain is formed with the thermoplastic elastomer, and with this domain, impact applied to the tread is converted into heat and easily relaxed. In addition, with cooperation of the above-described (1) to (3), in the tire of the present invention, impact from the tread is efficiently converted into heat, while heat is less likely to be accumulated in the tread, and it is considered that ride comfort is less likely to be impaired even when the tire is continuously run on an uneven road surface.

The thermoplastic elastomer preferably comprises a styrene-based thermoplastic elastomer.

This is because that effects of the present invention are easily exhibited.

The thermoplastic elastomer preferably comprises a hydrogenated styrene-based thermoplastic elastomer.

This is because that the hydrogenated thermoplastic elastomer has a high abrasion resistance, so that deterioration of ride comfort due to abrasion can be suppressed.

A content of the thermoplastic elastomer is preferably 10 parts by mass or more based on 100 parts by mass of the rubber component.

This is because that a ratio of the thermoplastic elastomer in the rubber composition of the tread rubber becomes high, so that the effects of the present invention become more easily exhibited.

The S preferably satisfies the following inequality (4):

$$\text{Inequality (4): } S \leq 3.0$$

This is because that effects of the present invention become easily exhibited.

The rubber composition preferably comprises 80 parts by mass or less of silica.

This is because that the effects of the present invention, particularly both ride comfort and wet grip performance become easily achieved.

The rubber composition preferably comprises 5 parts by mass or less of carbon black.

This is because that the effects of the present invention, particularly both ride comfort and wet grip performance become easily achieved.

The rubber composition preferably comprises 85 parts by mass or less of a reinforcing filler.

This is because that the effects of the present invention, particularly both ride comfort and wet grip performance become easily achieved.

The rubber composition preferably comprises 24 parts by mass or less of oil.

This is because that the effects of the present invention, particularly both ride comfort and wet grip performance become easily achieved.

The rubber composition preferably comprises 5 parts by mass or less of resin.
This is because that the effects of the present invention, particularly both ride comfort and wet grip performance become easily achieved.
The rubber composition preferably comprises 29 parts by mass or less of a plasticizing agent.
This is because that the effects of the present invention, particularly both ride comfort and wet grip performance become easily achieved.
The tire of the present invention is preferably a tire for a passenger car.
This is because that it is suitable for enjoying utility of the effects of the present invention.

<Definition>

A "standardized rim" is a rim defined for each tire in a standard system including a standard, on which the tire is based, by the standard, i.e., a "standard rim" in JATMA, "Design Rim" in TRA, or "Measuring Rim" in ETRTO. Besides, if a size of the tire is not specified in the above-described standard system, the standardized rim is a rim which can be assembled to the tire and whose width is narrowest among rims having the smallest diameter that does not cause air leakage between the rim and the tire.
A "standardized internal pressure" is an air pressure defined for each tire in a standard system including a standard on, which the tire is based, by the standard, i.e., a "MAXIMUM AIR PRESSURE" in JATMA, the maximum value described in Table "TIRE LOAD LIMITS AT VARIOUS COLD INFLATION PRESSURES" in TRA, or "INFLATION PRESSURE" in ETRTO. Besides, if a size of the tire is not specified in the above-described standard system, the standardized internal pressure shall be 250 kPa.
The "standardized state" is a state where the tire is rim-assembled on a standardized rim, a standardized internal pressure is filled, and no load is applied. Besides, in a case of a tire having a size not specified in the above-described standard system, the standardized state is a state where the tire is rim-assembled on the minimum rim, 250 kPa is filled, and no load is applied. In the present specification, a dimension and an angle of each part of a tire are measured in the above-described standardized state, unless otherwise specified. In a case where there are patterns or characters on the side of the tire, the measurement is conducted as if there are no such patterns or characters.
The "thickness T (mm) of the tread rubber at the tire equator" is a thickness (mm) of a tread rubber at a tire equator in a standardized state, for example, a distance from a point on a tread surface plane PT intersecting with the tire equator to a belt layer 6 in FIG. 1.
The "thickness S (mm) of the sidewall rubber at the tire maximum width position" is a thickness (mm) of a sidewall rubber at a tire maximum width position in a standardized state, for example, a distance from a point on a sidewall PS at the tire maximum width position to a carcass in FIG. 1.
The "tire weight G (kg)"" is a weight of a single tire excluding a weight of a rim.
The "maximum load capacity (WL) (kg)" is a value calculated by the following equation (A) and (B) when a tire cross-sectional width measured in a standardized state is defined as Wt (mm), a tire cross-sectional height is defined as Ht (mm), and a tire outer diameter is defined as Dt (mm). V is a virtual volume of space occupied by a tire. The tire cross-sectional width Wt is the maximum width between outer surfaces of sidewalls excluding, if any, patterns or characters on the side surface of the tire in the standardized state. The tire cross-sectional height Ht is a distance from a bottom surface of a bead part to an outermost surface of a tread, which is half a difference between a tire outer diameter and a nominal size of a rim diameter. In the present invention, the maximum load capacity refers to the above-described "maximum load capacity (WL) (kg)" unless otherwise specified.

$$V = \{(Dt/2)^2 - (Dt/2-Ht)^2\} \times \pi \times Wt \ldots (A)$$

$$WL = 0.000011 \times V + 100 \ldots (B)$$

An "oil content" also includes an amount of oil contained in the oil-extended rubber.
<Measuring method>
A "styrene content"" is a value calculated by $^1$H-NMR measurement, and is applied to, for example, a rubber component having a repeating unit derived from styrene such as a SBR.
A "vinyl content (1,2-bond butadiene unit amount)" is a value calculated by infrared absorption spectrometry according to JIS K 6239-2: 2017, and is applied to, for example, a rubber component having a repeating unit derived from butadiene such as a SBR and a BR.
A "cis content (cis-1,4-bond butadiene unit amount)" is a value calculated by infrared absorption spectrometry according to JIS K 6239-2: 2017, and is applied to, for example, a rubber component having a repeating unit derived

from butadiene such as a BR.

A "Glass transition temperature (Tg)" is a value measured by measurement with raising temperature at a temperature rising rate of 10°C/min using a differential scanning calorimeter (Q200) manufactured by TA Instruments Japan Inc. according to JIS K7121, and is applied to, for example, a rubber component such as a SBR.

A "weight-average molecular weight (Mw)" can be calculated in terms of a standard polystyrene based on measurement values obtained by a gel permeation chromatography (GPC) (e.g., GPC-8000 Series manufactured by Tosoh Corporation, detector: differential refractometer, column: TSKGEL SUPERMULTIPORE HZ-M manufactured by Tosoh Corporation). For example, it is applied for a SBR, a BR, and the like.

A "$N_2SA$ of carbon black" is measured according to JIS K 6217-2: 2017.

A "DBP oil absorption amount of carbon black" is measured according to JIS K 6217-4: 2017.

A "$N_2SA$ of silica" is measured by the BET method according to ASTM D3037-93.

<Tire>

The tire which is one embodiment of the present invention will be described.

The tire of the present invention comprises a tread part and a sidewall part, wherein, when a thickness of a tread rubber of the tread part at a tire equator is defined as T (mm), a thickness of a sidewall rubber of the sidewall part at a tire maximum width position is defined as S (mm), a tire weight is defined as G (kg), and the maximum load capacity of the tire is defined as WL (kg), T, S, G, and WL satisfy a predetermined relationship indicated by the inequality (1) to (3).

(Inequality (1))

The inequality (1) defines that the thickness T (mm) of the tread rubber of the tread part of the tire of the present invention at the tire equator is 8.5 mm or less. This is because if the thickness of the tread rubber is too thick, heat will be accumulated in the tread, which is not preferable from the viewpoint of the effects of the present invention. The T is preferably 8.0 mm or less, more preferably 7.8 mm or less, further preferably 7.6 mm or less, further preferably 7.5 mm or less, further preferably 7.2 mm or less. On the other hand, a lower limit of the T is, but not particularly limited to, usually about 7.0 mm, from the viewpoint of the effects of the present invention.

(Inequality (2))

The inequality (2) defines that a ratio (S/T) of the thickness S (mm) of the sidewall rubber forming the sidewall part of the tire of the present invention at the tire maximum width position to the T (mm) is less than 0.50. This is because if the thickness of the sidewall rubber is too thick, heat is not easily dissipated from the sidewall and is accumulated in the tread, which is not preferable from the viewpoint of the effects of the present invention. The S/T is preferably 0.45 or less, more preferably 0.40 or less, further preferably 0.35 or less, further preferably 0.33 or less, further preferably 0.30 or less. On the other hand, a lower limit of the S/T is, but not particularly limited to, usually about 0.28, from the viewpoint of the effects of the present invention.

(Inequality (3))

The inequality (3) defines that the ratio (G/WL) of the tire weight G (kg) of the tire of the present invention to the maximum load capacity WL (kg) is 0.012 or less. This is because that the tire of the present invention is intended for use as a relatively lightweight tire whose weight is limited based on the maximum load capacity. The G/WL is preferably 0.011 or less, further preferably 0.010 or less, further preferably 0.009 or less. On the other hand, a lower limit of the G/WL is, but not particularly limited to, usually about 0.008, from the viewpoint of the effects of the present invention. The value of the G/WL can be lowered by lowering the value of the G relative to the value of the WL.

The value of the G can be lowered by lowering a mass of each member such as a tread rubber and a sidewall rubber, and in addition, for example, for a member formed of a rubber composition, it can also be lowered by lowering a specific gravity of the rubber composition. The specific gravity of the rubber composition can be lowered, for example, by lowering a content of components such as silica and carbon black.

(Inequality (4))

In the tire of the present invention, the S (mm) preferably satisfies the following inequality (4):

$$\text{Inequality (4): } S \leq 3.0$$

This is because if the thickness of the sidewall rubber is too thick, heat is not easily dissipated from the sidewall and is accumulated in the tread, which is not preferable from the viewpoint of the effects of the present invention. The S is more preferably 2.9 mm or less, further preferably 2.8 mm or less, further preferably 2.7 mm or less, further preferably 2.6 mm or less, further preferably 2.5 mm or less. On the other hand, a lower limit of the S is, but not particularly limited to, usually about 2.0 mm, from the viewpoint of the effects of the present invention.

<Rubber composition>

The rubber composition of the tread rubber according to the tire of the present invention comprises less than 100 parts by mass of a thermoplastic elastomer based on 100 parts by mass of the rubber component.

(Rubber component)

In the present invention, as the rubber component, any of those usually used in the tire industry can be appropriately used. Examples of such rubber component include, for example, diene-based rubbers such as an isoprene-based rubber, a styrene-butadiene rubber (SBR), a butadiene rubber (BR), a styrene-isoprene-butadiene copolymer rubber (SIBR), a chloroprene rubber (CR), an acrylonitrile-butadiene rubber (NBR), and a polynorbornene rubber, as well as non-diene-based rubbers such as a hydrogenated nitrile rubber (HNBR), a butyl rubber (IIR), an ethylene propylene rubber, a silicone rubber, a polyethylene chloride rubber, a fluororubber (FKM), an acrylic rubber (ACM), and a hydrin rubber, and the like. The rubber component may be used alone, or two or more thereof may be used in combination.

The rubber component preferably comprises a diene-based rubber, and may be a rubber component consisting of a diene-based rubber. Moreover, it preferably comprises at least one selected from a group consisting of an isoprene-based rubber, a SBR, and a BR, as the diene-based rubber. The rubber component is preferably a rubber component comprising a SBR, more preferably a rubber component comprising a SBR and a BR, and it may be a rubber component consisting of a SBR and a BR, or an isoprene-based rubber may be added thereto.

«SBR»

The SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Among them, a S-SBR and a modified SBR are preferable from the viewpoint that they can well improve fuel efficiency and abrasion resistance. Furthermore, hydrogenated ones of these SBRs (hydrogenated SBRs) and the like can also be used. These SBRs may be used alone, or two or more thereof may be used in combination.

A styrene content of the SBR is preferably 5% by mass or more, more preferably 7% by mass or more, further preferably 10% by mass or more, from the viewpoints of securing damping property at the tread part and wet grip performance. Moreover, it is preferably 60% by mass or less, more preferably 50% by mass or less, further preferably 40% by mass or less, from the viewpoints of temperature dependence of grip performance and abrasion resistance. Besides, in the present specification, the styrene content of the SBR is calculated by the above-described method.

A vinyl content of the SBR is preferably 10 mol% or more, more preferably 20 mol% or more, further preferably 30 mol% or more, from the viewpoints of ensuring reactivity with silica, rubber strength, and abrasion resistance. Moreover, the vinyl content of the SBR is preferably 70 mol% or less, more preferably 65 mol% or less, further preferably 60 mol% or less, from the viewpoints of prevention of increase in temperature dependence, wet grip performance, elongation at break, and abrasion resistance. Besides, in the present specification, the vinyl content of the SBR (1,2-bond butadiene unit amount) is measured by the above-described method.

A glass transition temperature (Tg) of the SBR is preferably -90° C or more, more preferably -70°C or more, further preferably -50°C or more, from the viewpoint of wet grip performance. Moreover, the Tg is preferably 0°C or less, more preferably -10°C or less, further preferably -15°C or less, from the viewpoints of fuel efficiency, etc. Besides, the Tg can be measured by the above-described method.

A weight-average molecular weight (Mw) of the SBR is preferably 150,000 or more, more preferably 200,000 or more, from the viewpoint of abrasion resistance. Moreover, the Mw is preferably 2,500,000 or less, more preferably 2,000,000 or less, further preferably 1,500,000 or less, from the viewpoints of cross-linking uniformity, etc. Besides, the Mw can be calculated by the above-described method.

As the SBR, an oil-extended SBR can be used, or a non-oil-extended SBR can be used. An extending oil amount of the SBR, i.e., a content of an extending oil contained in the SBR when used is preferably 10 to 50 parts by mass based on 100 parts by mass of a rubber solid content of the SBR.

As the SBR, for example, SBRs manufactured and sold by Sumitomo Chemical Co., Ltd., JSR Corporation,

Ube Industries, Ltd., Asahi Kasei Corporation, Zeon Corporation, ZS Elastomer Co., Ltd., etc. can be used.

A content of the SBR when compounded in the rubber component is preferably 10% by mass or more, more preferably 30% by mass or more, further preferably 50% by mass or more, further preferably 70% by mass or more, further preferably 90% by mass or more, and may be 100% by mass, from the viewpoints of securing damping property at the tread part and wet grip performance. Moreover, it is preferably 95% by mass or less, more preferably 90% by mass or less, from the viewpoint of improving durability by suppressing heat generation at the tread part.

«BR»

The BR is not particularly limited, and those common in the tire industry can be used such as, for example, a BR having a cis content of less than 50% (a low cis BR), a BR having a cis content of 90% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). The BR may be used alone, or two or more thereof may be used in combination.

The cis content of the BR is preferably 90 mol% or more, more preferably 93 mol% or more, further preferably 95 mol% or more, from the viewpoints of durability and abrasion resistance. Besides, the cis content is measured by the above-described measuring method.

As the rare-earth-based BR, those commonly used in the tire industry can be used. As the rare-earth element-based catalyst used for synthesis (polymerization) of the rare-earth-based BR, a known one can be used, examples of which include catalysts including, for example, a lanthanum series rare-earth element compound, an organic aluminum compound, aluminoxane, a halogen-containing compound, and, if necessary, a Lewis base. Among them, a Nd-based catalyst using a neodymium (Nd)-containing compound as the lanthanum-series rare-earth element compound is preferable from the viewpoint of obtaining a BR having a high cis content and a low vinyl content.

Examples of the SPB-containing BR include those in which 1,2-syndiotactic polybutadiene crystal is chemically bonded with BR and dispersed, but not those in which the crystal is simply dispersed in the BR.

Examples of the modified BRs include those obtained by adding a tin compound after polymerizing 1,3-butadiene by a lithium initiator, and further those in which the terminal of the modified BR molecule has tin-carbon bond (a tin-modified BR), a butadiene rubber (a modified BR for silica) having a condensed alkoxysilane compound at its active terminal, and the like.

A weight-average molecular weight (Mw) of the BR is preferably 300,000 or more, more preferably 350,000 or more, further preferably 400,000 or more, from the viewpoint of abrasion resistance. Moreover, it is preferably 2,000,000 or less, more preferably 1,000,000 or less, from the viewpoints of cross-linking uniformity, etc. Besides, the Mw can be calculated by the above-described method.

As the BR, for example, those commercially available from Ube Industries, Ltd., Sumitomo Chemical Co., Ltd., JSR Corporation, LANXESS, etc. can be used.

A content of the BR when compounded in the rubber component is preferably 1% by mass or more, more preferably 5% by mass or more, further preferably 10% by mass or more, from the viewpoint of abrasion resistance. Moreover, it is preferably 40% by mass or less, more preferably 30% by mass or less, further preferably 20% by mass or less, further preferably 15% by mass or less, from the viewpoint of wet grip performance.

<<Isoprene-based rubber>>

As an isoprene-based rubber, for example, those common in the tire industry can be used, such as an isoprene rubber (IR) and a natural rubber. Among them, examples of the natural rubber include a non-modified natural rubber (NR), as well as a modified natural rubber such as an epoxidized natural rubber (ENR), a hydrogenated natural rubber (HNR), a deproteinized natural rubber (DPNR), an ultra pure natural rubber, and a grafted natural rubber, and the like. Among them, a natural rubber is preferable, and for example, a NR can be appropriately used. These isoprene-based rubbers may be used alone, or two or more thereof may be used in combination.

The NR is not particularly limited, and those common in the tire industry can be used, examples of which include, for example, SIR20, RSS#3, TSR20, and the like.

A content of the isoprene-based rubber in the rubber component is preferably 5% by mass or more, more preferably 10% by mass or more, further preferably 15% by mass or more, further preferably 20% by mass or more, further preferably 25% by mass or more, from the viewpoints of processability and durability. On the other hand, an upper limit of the content of the isoprene-based rubber in the rubber component is, but not particularly limited to, preferably 60% by mass or less, more preferably 50% by mass or less, further preferably 40% by mass or less, further preferably 30% by mass or less, further preferably 20% by mass or less, further preferably 10% by mass or less, from the viewpoint of obtaining a good ride comfort due to the damping property at the tread part.

(Thermoplastic elastomer)

The "thermoplastic elastomer" is a polymer compound having elasticity, and means a thermoplastic resin material consisting of a copolymer which has a polymer forming a crystalline hard segment having a high melting point and a polymer forming an amorphous soft segment having a low glass transition temperature. In the thermoplastic elastomer, the crystalline hard segment having a high melting point behaves as a pseudo cross-linking point and expresses elasticity. In the thermoplastic elastomer, the pseudo cross-linking point can be regenerated by heating the hard segment to melt it once and then cooling it, and therefore it can be reused. On the other hand, a rubber has a double bond or the like in a molecular chain and generates a three-dimensional network structure and expresses elasticity by being crosslinked (vulcanized) with addition of sulfur or the like. Therefore, once the rubber is crosslinked (vulcanized), it loses its fluidity due to this three-dimensional network structure, and thus it is difficult to be reused it even if it is heated. Besides, the thermoplastic elastomer of the present invention shall not comprise the above-described rubber component.

The thermoplastic elastomer that can be used in the present invention is not particularly limited, examples of which include, for example, a styrene-based thermoplastic elastomer, an urethane-based thermoplastic elastomer, an olefin-based thermoplastic elastomer, a polyester-based thermoplastic elastomer, and a polyamide-based thermoplastic elastomer, and the like. Among them, a styrene-based thermoplastic elastomer or an urethane-based thermoplastic elastomer is preferable, and a styrene-based thermoplastic elastomer is more preferable. The thermoplastic elastomer can be used alone, or two or more thereof can be used in combination.

<<Styrene-based thermoplastic elastomer>>

The styrene-based thermoplastic elastomer is a copolymer having at least one styrene block (hard segment) and at least one elastomer block (soft segment). A molecular structure of the styrene-based thermoplastic elastomer is, but not particularly limited to, preferably a molecular structure having a styrene block at one terminal or both terminals thereof and an elastomer block in the other parts thereof. When it has a styrene block at least at one terminal thereof, a better grip performance tends to be obtained. Moreover, it is more preferable that the styrene-based thermoplastic elastomer has a structure having no styrene block in a main chain part other than terminals thereof. With such a structure, hardness of the thermoplastic elastomer in a normal temperature range does not become too high, a better grip performance can be obtained, and better fracture characteristics and abrasion resistance tend to be obtained.

Examples of the elastomer block include, for example, vinyl-polydiene such as styrene-butadiene (SB), polyisoprene (IP), polybutadiene, polyethylene, polychloroprene, poly 2,3-dimethylbutadiene, and the like. Moreover, as the elastomer block, a hydrogenated elastomer block can also be used.

Examples of the styrene-based thermoplastic elastomer include, for example, a styrene-isobutylene block copolymer (SIB), a styrene-butadienestyrene block copolymer (SBS), a styrene-isoprene-styrene block copolymer (SIS), a styrene-ethylene-butylene block copolymer (SEB), a styrene-ethylene/propylene block copolymer (SEP), a styrene-ethylene/butylene-styrene block copolymer (SEBS), a styrene-ethylene/butylene-ethylene block copolymer (SEBC), a hydrogenated styrene/butadiene copolymer (HSBR), a styrene-ethylene/propylene-styrene block copolymer (SEPS), a styrene-ethylene/ethylene/propylene-styrene block copolymer (SEEPS), a styrene-butadiene/butylene-styrene block copolymer (SBBS), and the like.

A content of a styrene unit (styrene content) of the styrene-based thermoplastic elastomer is preferably 5% by mass or more, more preferably 10% by mass or more, further preferably 15% by mass or more, from the viewpoint of grip performance. Moreover, it is preferably 30% by mass or less, more preferably 25% by mass or less, further preferably 20% by mass or less, from the viewpoint of suppressing heat generation.

<<Urethane-based thermoplastic elastomer>>

The urethane-based thermoplastic elastomer is not particularly limited, but for example, those prepared from polyol and diisocyanate can be appropriately used. Examples of polyol include a polyester-based polyol, a polyester ether-based polyol, a polycarbonate-based polyol, a polyether-based polyol, and the like. Examples of diisocyanate include, for example, tolylene diisocyanate (TDI), 4,4'-diphenylmethane diisocyanate (MDI), and the like.

<<Olefin-based thermoplastic elastomer>>

Examples of the olefin-based thermoplastic elastomer include, for example, an ethylene/$\alpha$-olefin copolymer such as an ethylene-propylene copolymer (EPR), an ethylene-butene copolymer (EBR), an ethylene-hexene copolymer (EHR), and an ethylene-octene copolymer (EOR); an ethylene/$\alpha$-olefin/diene terpolymer such as an ethylene-propylene-ethylidenenorbornene copolymer, an ethylene-propylene-butadiene copolymer, and an ethylene-propylene-isoprene copolymer, and the like.

<<Hydrogenation>>

Abrasion resistance of the thermoplastic elastomer is improved by hydrogenation. Thus, the hydrogenated thermoplastic elastomer is preferable from the viewpoint of further suppressing deterioration of ride comfort due to abrasion to maintain ride comfort of the lightweight tire for a long period of time. Examples of such a hydrogenated thermoplastic elastomer include, for example, a hydrogenated styrene-based thermoplastic elastomer.

The thermoplastic elastomer preferably comprises a hydrogenated thermoplastic elastomer, or preferably consists of a hydrogenated thermoplastic elastomer.

<<Modification>>

As the thermoplastic elastomer, those modified with a modifying agent to introduce a modifying group can be used, if desired. As such a modifying group, any of those usually used in this field can be appropriately used, examples of which include, for example, an alkoxysilyl group (e.g., a trimethoxysilyl group, a triethoxysilyl group), and the like. For example, if a styrene-based thermoplastic elastomer having a styrene terminal at least at one end is synthesized and then treated with chlorotriethoxysilane as a modifying agent, a modified styrene-based thermoplastic elastomer can be obtained in which a triethoxysilyl group is introduced into an active terminal of the styrene-based thermoplastic elastomer.

As the thermoplastic elastomer, a commercially available product or a synthetically obtained product may be used. Examples of the commercially available product include, for example, those manufactured and sold by JSR Corporation, Asahi Kasei Corporation, Kuraray Co., Ltd., and Nippon Miractran Company Limited.

A content of the thermoplastic elastomer based on 100 parts by mass of the rubber component is less than 100 parts by mass. When the content of the thermoplastic elastomer is 100 parts by mass or more, abrasion resistance deteriorates, which is not preferable. The content of the thermoplastic elastomer is preferably 90 parts by mass or less, more preferably 70 parts by mass or less, further preferably 50 parts by mass or less, from the viewpoint of abrasion resistance. On the other hand, a lower limit of the content of the thermoplastic elastomer may vary depending on other compoundings, but is not particularly limited as long as the effects of the present invention are exhibited. However, such content is, for example, 5 parts by mass or more, more preferably 10 parts by mass or more, further preferably 15 parts by mass or more, further preferably 20 parts by mass or more, further preferably 25 parts by mass or more.

(Reinforcing filler)

The rubber composition according to the present invention preferably comprises a reinforcing filler. The reinforcing filler preferably comprises carbon black and silica, but may be a reinforcing filler consisting of at least one of carbon black and silica.

<<Carbon black>>

Carbon black is not particularly limited, and those common in the tire industry can be used such as GPF, FEF, HAF, ISAF, and SAF, and specifically, N110, N115, N120, N125, N134, N135, N219, N220, N231, N234, N293, N299, N326, N330, N339, N343, N347, N351, N356, N358, N375, N539, N550, N582, N630, N642, N650, N660, N683, N754, N762, N765, N772, N774, N787, N907, N908, N990, N991, and the like can be appropriately used, and in-house synthesized products and the like can also be appropriately used. These carbon black may be used alone, or two or more thereof may be used in combination.

A nitrogen adsorption specific surface area ($N_2SA$) of carbon black is preferably 50 $m^2/g$ or more, more preferably 80 $m^2/g$ or more, further preferably 100 $m^2/g$ or more, from the viewpoints of weather resistance and reinforcing property. Moreover, it is preferably 250 $m^2/g$ or less, more preferably 220 $m^2/g$ or less, from the viewpoints of dispersibility, fuel efficiency, fracture characteristics, and durability. Besides, the $N_2SA$ of carbon black in the present specification is a value measured by the above-described method.

A content of carbon black when compounded based on 100 parts by mass of the rubber component is preferably 1 part by mass or more, more preferably 3 parts by mass or more, further preferably 5 parts by mass or more, from the viewpoints of weather resistance and reinforcing property. Moreover, it is preferably 40 parts by mass or less, more preferably 30 parts by mass or less, further preferably 20 parts by mass or less, further preferably 5 parts by mass or less, from the viewpoint of improving durability by suppressing heat generation at the tread part.

<<Silica>>

Silica is not particularly limited, and those common in the tire industry can be used, such as, for example, silica prepared by a dry process (anhydrous silica) and silica prepared by a wet process (hydrous silica). Among them, hydrous

silica prepared by a wet process is preferable from the reason that it has many silanol groups. These silica may be used alone, or two or more thereof may be used in combination.

A nitrogen adsorption specific surface area ($N_2SA$) of silica is preferably 140 $m^2/g$ or more, more preferably 150 $m^2/g$ or more, further preferably 160 $m^2/g$ or more, further preferably 170 $m^2/g$ or more, from the viewpoint of securing reinforcing property and damping property at the tread part. Moreover, it is preferably 350 $m^2/g$ or less, more preferably 300 $m^2/g$ or less, further preferably 250 $m^2/g$ or less, from the viewpoints of heat generation and processability. Besides, the $N_2SA$ of silica in the present specification is a value measured by the above-described method.

A content of silica when compounded based on 100 parts by mass of the rubber component is preferably 20 parts by mass or more, more preferably 30 parts by mass or more, further preferably 40 parts by mass or more, further preferably 50 parts by mass or more, from the viewpoints of securing damping property at the tread part and wet grip performance. Moreover, it is preferably 200 parts by mass or less, more preferably 150 parts by mass or less, more preferably 120 parts by mass or less, further preferably 100 parts by mass or less, further preferably 90 parts by mass or less, further preferably 80 parts by mass or less, from the viewpoints of reducing the specific gravity of the rubber composition to reduce the weight, improving durability by suppressing heat generation at the tread part, and securing ride comfort with softness of the rubber.

<<Other reinforcing fillers>>

As reinforcing fillers other than silica and carbon black, those commonly used in the tire industry can be compounded, such as aluminum hydroxide, calcium carbonate, alumina, clay, and talc.

A content of silica in a total of 100% by mass of silica and carbon black is preferably 50% by mass or more, more preferably 60% by mass or more, further preferably 70% by mass or more, further preferably 80% by mass or more, further preferably 90% by mass or more, and it may be 100% by mass.

A total content of the reinforcing filler based on 100 parts by mass of the rubber component is preferably 200 parts by mass or less, more preferably 150 parts by mass or less, further preferably 120 parts by mass or less, further preferably 100 parts by mass or less, further preferably 85 parts by mass or less, from the viewpoint of the effects of the present invention. Moreover, it is preferably 25 parts by mass or more, more preferably 35 parts by mass or more, further preferably 40 parts by mass or more, further preferably 45 parts by mass or more, further preferably 55 parts by mass or more, from the viewpoint of securing reinforcing property and damping property at the tread part.

Besides, in a case where the reinforcing filler consists of carbon black and silica, if the total content of the reinforcing filler and the content of one of carbon black or silica are determined as described above, the remaining content of the other is accordingly determined.

(Silane coupling agent)

Silica is preferably used in combination with a silane coupling agent. The silane coupling agent is not particularly limited, and a silane coupling agent conventionally used in combination with silica in the tire industry can be used, examples of which include, for example, silane coupling agents having mercapto groups described below; silane coupling agents having sulfide groups such as bis(3-triethoxysilylpropyl)disulfide and bis(3-triethoxysilylpropyl)tetrasulfide; silane coupling agents having vinyl groups such as vinyltriethoxysilane and vinyltrimethoxysilane; silane coupling agents having amino groups such as 3-aminopropyltriethoxysilane, 3-aminopropyltrimethoxysilane, and 3-(2-aminoethyl)aminopropyltriethoxysilane; glycidoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; chloro-based silane coupling agents such as 3-chloropropyltrimethoxysilane and 3-chloropropyltriethoxy, and the like. Among them, it is preferable to comprise at least one of a silane coupling agent having a sulfide group and a silane coupling agent having a mercapto group, and it is preferable to comprise a silane coupling agent having a sulfide group. Examples of the silane coupling agent include, for example, those manufactured and sold by Momentive Performance Materials and Evonik Degussa GmbH, and the like. These silane coupling agents may be used alone, or two or more thereof may be used in combination.

It is preferable that silane coupling agent having a mercapto group is at least one of a compound represented by the following chemical formula (1) and a compound comprising a bond unit A represented by the following chemical formula (2) and a bond unit B represented by the following chemical formula (3).

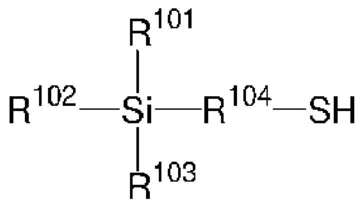

(1)

(wherein, $R^{101}$, $R^{102}$, and $R^{103}$ each independently represents an alkyl having 1 to 12 carbon atoms, an alkoxy having 1 to 12 carbon atoms, or a group represented by $-O-(R^{111}-O)_z-R^{112}$ (z pieces of $R^{111}$ each independently represents a divalent hydrocarbon group having 1 to 30 carbon atoms; $R^{112}$ represents an alkyl having 1 to 30 carbon atoms, an alkenyl having 2 to 30 carbon atoms, an aryl having 6 to 30 carbon atoms, or an aralkyl having 7 to 30 carbon atoms; and z represents an integer of 1 to 30); and $R^{104}$ represents an alkylene having 1 to 6 carbon atoms.)

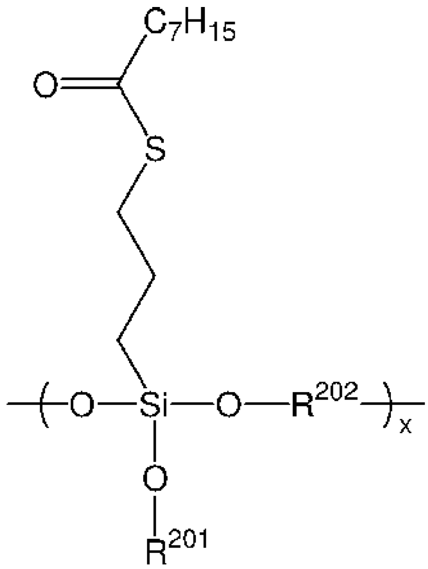

(2)

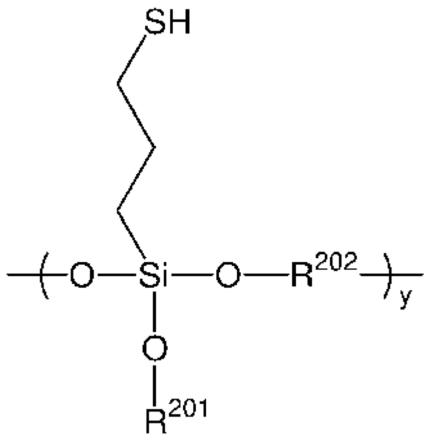

(3)

(wherein, x represents an integer of 0 or more; y represents an integer of 1 or more; $R^{201}$ represents hydrogen atom, or an alkyl having 1 to 30 carbon atoms, an alkenyl having 2 to 30 carbon atoms or an alkynyl having 2 to 30 carbon atoms optionally substituted with a halogen atom, hydroxyl or carboxyl; and $R^{202}$ represents an alkylene having 1 to 30 carbon atoms, an alkenylene having 2 to 30 carbon atoms, or an alkynylene having 2 to 30 carbon atoms; where $R^{201}$ and $R^{202}$ may together form a ring structure.)

Examples of the compound represented by the chemical formula (1) include, for example, 3-mercaptopropyltrimethoxysilane, 3-mercaptopropyltriethoxysilane, 2-mercaptoethyltrimethoxysilane, 2-mercaptoethyltriethoxysilane, a compound represented by the following chemical formula (4), and the like. Examples of these silane coupling agents include, for example, those manufactured by Evonik Degussa GmbH. These silane coupling agents may be used alone, or two or more thereof may be used in combination.

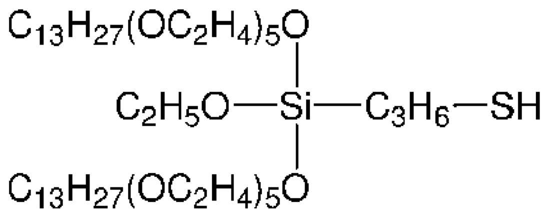

(4)

Examples of the compound comprising the bond unit A represented by the chemical formula (2) and the bond unit B represented by the chemical formula (3) include, for example, those manufactured by Momentive Performance Materials, and the like. They may be used alone, or two or more thereof may be used in combination.

A content of the silane coupling agent when compounded based on 100 parts by mass of silica is preferably 1.0 part by mass or more, more preferably 3.0 parts by mass or more, further preferably 5.0 parts by mass or more, from the viewpoint of enhancing dispersibility of silica. Moreover, it is preferably 20 parts by mass or less, more preferably 15 parts by mass or less, further preferably 12 parts by mass or less, from the viewpoint of preventing deterioration of abrasion resistance.

(Plasticizing agent)

The rubber composition according to the present invention preferably comprises a plasticizing agent. In the present specification, the plasticizing agent is a material that imparts plasticity to the rubber component, and has a concept that includes a liquid plasticizing agent (a plasticizing agent in liquid state at 25°C) and a solid plasticizing agent (a plasticizing agent in solid state at 25°C). Specifically, it is a component as extracted from the rubber composition using acetone. They may be used alone, or two or more thereof may be used in combination.

Examples of the liquid plasticizing agent include oil, liquid polymers (diene-based, olefin-based, ester-based, etc.), a liquid resin, an essential oil derived from a natural product such as a turpentine oil, an ester-based plasticizing agent, and the like. Among them, oil is preferable. Examples of the solid plasticizing agent include a solid (solid-state) resin at 25°C which is usually used in the tire industry. They may be used alone, or two or more thereof may be used in combination.

A total content of the plasticizing agents (a total content of the liquid plasticizing agent and the solid plasticizing agent) is preferably 10 parts by mass or more, more preferably 20 parts by mass or more, further preferably 25 parts by mass or more, and the total content is preferably 100 parts by mass or less, more preferably 90 parts by mass or less, further preferably 80 parts by mass or less, further preferably 70 parts by mass or less, further preferably 60 parts by mass or less, further preferably 29 parts by mass or less, based on 100 parts by mass of the rubber component, from the viewpoint of the effects of the present invention.

«Oil»

Examples of oil include, for example, a process oil, vegetable fats and oils, animal fats and oils, and the like. Examples of the process oil include a paraffin-based process oil, a naphthene-based process oil, an aroma-based process oil, and the like. In addition, as an environmental measure, examples of the process oil include a process oil having a low content of a polycyclic aromatic (PCA) compound. Examples of the process oil having a low content of a PCA include Treated Distillate Aromatic Extract (TDAE) in which an oil aromatic process oil is re-extracted, an aroma substitute oil which is a mixture of asphalt and a naphthenic oil, mild extraction solvates (MES), a heavy naphthenic oil, and the like.

A content of oil when compounded based on 100 parts by mass of the rubber component is preferably 1 part by mass or more, more preferably 5 parts by mass or more, further preferably 10 parts by mass or more, from the viewpoint of processability. Moreover, it is preferably 50 parts by mass or less, more preferably 40 parts by mass or less, further preferably 30 parts by mass or less, further preferably 24 parts by mass or less, from the viewpoints of fuel efficiency and durability. Besides, in the present specification, the content of oil also includes an amount of oil contained in an oil-extended rubber and an oil-containing sulfur.

«Resin»

Resin is not particularly limited, examples of which include a petroleum resin, a terpene-based resin, a rosin-based resin, a phenol-based resin, and the like, which are commonly used in the tire industry. These resin may be used alone, or two or more thereof may be used in combination.

<<Petroleum resin>>

Examples of the petroleum resin include, for example, a C5-based petroleum resin, an aromatic-based petroleum resin, and a C5-C9-based petroleum resin. The petroleum resin can be used alone, or two or more thereof can be used in combination.

C5-based petroleum resin

In the present specification, a "C5-based petroleum resin" refers to a resin obtained by polymerizing a C5 fraction. Examples of the C5 fraction include, for example, a petroleum fraction equivalent to 4 to 5 carbon atoms such as cyclopentadiene, pentene, pentadiene, and isoprene. As the C5-based petroleum resin, a dicyclopentadiene resin (DCPD resin) is appropriately used. The C5-based petroleum resin can be used alone, or two or more thereof can be used in combination.

Aromatic-based petroleum resin

In the present specification, the "aromatic-based petroleum resin" refers to a resin obtained by polymerizing a C9 fraction, and may be hydrogenated or modified. Examples of the C9 fraction include, for example, a petroleum fraction equivalent to 8 to 10 carbon atoms such as vinyltoluene, alkylstyrene, indene, and methyl indene. As specific examples of the aromatic-based petroleum resin, for example, a coumarone indene resin, a coumarone resin, an indene resin, and an aromatic vinyl-based resin are appropriately used. As the aromatic vinyl-based resin, a homopolymer of α-methylstyrene or styrene or a copolymer of α-methylstyrene and styrene is preferable, and a copolymer of α-methylstyrene and styrene is more preferable, because it is economical, easy to process, and excellent in heat generation. As the aromatic vinyl-based resin, for example, a commercially available product such as those manufactured by Kraton Corporation is appropriately used. The aromatic-based petroleum resin can be used alone, or two or more thereof can be used in combination.

C5-C9-based petroleum resin

In the present specification, the "C5-C9-based petroleum resin" refers to a resin obtained by copolymerizing the C5 fraction and the C9 fraction, and may be hydrogenated or modified. Examples of the C5 fraction and the C9 fraction include the above-described petroleum fractions. As the C5-C9-based petroleum resin, for example, a commercially available product such as those manufactured by Zibo Luhua Hongjin New Material Group Co., Ltd, Shandong Qilong Chemical Co., Ltd., and Tosoh Corporation is appropriately used. The C5-C9-based petroleum resin can be used alone, or two or more thereof can be used in combination.

<<Terpene-based resin>>

Examples of the terpene-based resin include terpene-based resins (terpene-based resins that are not hydrogenated) such as a polyterpene resin consisting of at least one selected from terpene compounds such as α-pinene, β-pinene, limonene, and a dipentene, an aromatic-modified terpene resin made from a terpene compound and an aromatic compound, a terpene phenol resin made from a terpene compound and a phenol-based compound, and those in which these terpene-based resins are hydrogenated (hydrogenated terpene-based resins). Here, examples of the aromatic compound used as a raw material for the aromatic-modified terpene resin include, for example, styrene, α-methylstyrene, vinyltoluene, divinyltoluene, and the like, and examples of the phenol-based compound used as a raw material for the terpene phenol resin include, for example, phenol, bisphenol A, cresol, xylenol, and the like. The terpene-based petroleum resin can be used alone, or two or more thereof can be used in combination.

<<Rosin-based resin>>

The rosin-based resin is a resin comprising a rosin acid as a main component, which is obtained by processing a pine resin. Examples of the rosin-based resin include naturally occurring rosin resins (polymerized rosins) such as a gum rosin, a wood rosin, and a tall oil rosin, which comprise resin acids such as an abietic acid, a neo-abietic acid, a palustric acid, a levopimaric acid, a pimaric acid, an isopimaric acid, and a dehydroabietic acid as main components, as well as modified rosin resins such as a hydrogenated rosin resin, an unsaturated carboxylic acid-modified rosin resin, and a rosin-modified phenol resin, rosin esters such as a rosin glycerin ester and an unsaturated carboxylic acid-modified rosin ester, a disproportionated rosin resin obtained by disproportionating a rosin resin, and the like. The rosin-based petroleum resin can be used alone, or two or more thereof can be used in combination.

<<Phenol-based resin>>

The phenol-based resin is a resin comprising a phenolic skeleton in its structure, examples of which include, for example, a phenolformaldehyde resin, an alkylphenolformaldehyde resin, an alkylphenol acetylene resin, an oil-modified phenolformaldehyde resin, and the like. The phenol-based resin can be used alone, or two or more thereof can be used in combination.
As resin, a petroleum resin is preferable, an aromatic-based petroleum resin is more preferable, and an aromatic vinyl-based resin is further preferable, from the viewpoint of obtaining ride comfort, durability and wet grip performance with a good balance.
A content of resin when compounded based on 100 parts by mass of the rubber component is preferably 1 part by mass or more, more preferably 3 parts by mass or more, further preferably 5 parts by mass or more, from the viewpoints of ride comfort and wet grip performance. Moreover, it is preferably 30 parts by mass or less, more preferably 20 parts by mass or less, further preferably 10 parts by mass or less, further preferably 5 parts by mass or less, from the viewpoint of durability.

(Other compounding agents)

The rubber composition for tread according to the present invention can appropriately comprise compounding agents commonly used in the conventional tire industry, such as, for example, wax, processing aid, an antioxidant, zinc oxide, stearic acid, a vulcanizing agent such as sulfur, and a vulcanization accelerator, in addition to the above-described components.

«Wax»

A content of wax when compounded based on 100 parts by mass of the rubber component is preferably 0.5 parts by mass or more, more preferably 1 part by mass or more, from the viewpoint of weather resistance of a rubber. Moreover, it is preferably 10 parts by mass or less, more preferably 5 parts by mass or less, from the viewpoint of preventing whitening of a tire due to bloom.

<<Processing aid>>

As processing aid, a fatty acid metal salt for the purpose of reducing viscosity of a rubber and securing releasability in an unvulcanized state, those widely and commercially available as a compatibilizer from the viewpoint of suppressing micro-layer separation of a rubber component, and the like can be used.
A content of processing aid when compounded based on 100 parts by mass of the rubber component is preferably 0.5 parts by mass or more, more preferably 1 part by mass or more, from the viewpoint of exhibiting an effect of improving processability. Moreover, it is preferably 10 parts by mass or less, more preferably 5 parts by mass or less, from the viewpoints of abrasion resistance and breaking strength.

<<Antioxidant>>

Examples of the antioxidant include, but not particularly limited to, for example, amine-based, quinoline-based, quinone-based, phenol-based, and imidazole-based compounds, a carbamic acid metal salt, and the like.
A content of the antioxidant when compounded based on 100 parts by mass of the rubber component is preferably 0.5 parts by mass or more, more preferably 1 part by mass or more, from the viewpoint of ozone crack resistance of a rubber. Moreover, it is preferably 10 parts by mass or less, more preferably 5 parts by mass or less, from the viewpoints of abrasion resistance and wet grip performance.

<<Zinc oxide>>

A content of zinc oxide when compounded based on 100 parts by mass of the rubber component is preferably 0.5 parts by mass or more, more preferably 1 part by mass or more, from the viewpoint of processability. Moreover, it is preferably 10 parts by mass or less, more preferably 5 parts by mass or less, from the viewpoint of abrasion resistance.
<<Stearic acid>>
A content of stearic acid when compounded based on 100 parts by mass of the rubber component is preferably 0.5 parts by mass or more, more preferably 1 part by mass or more, from the viewpoint of processability. Moreover, it is preferably 10 parts by mass or less, more preferably 5 parts by mass or less, from the viewpoint of vulcanization rate.

<<Vulcanizing agent>>

Sulfur is appropriately used as a vulcanizing agent. As sulfur, a powdery sulfur, oil a processing sulfur, a precipitated sulfur, a colloidal sulfur, an insoluble sulfur, a highly dispersible sulfur, and the like can be used.

A content of sulfur when compounded as a vulcanizing agent based on 100 parts by mass of the rubber component is preferably 0.5 parts by mass or more, more preferably 1.0 part by mass or more, from the viewpoint of securing a sufficient vulcanization reaction. Moreover, it is preferably 7.0 parts by mass or less, more preferably 6.0 parts by mass or less, further preferably 5.0 parts by mass or less, from the viewpoint of preventing deterioration.

Examples of vulcanizing agents other than sulfur include, for example, organic cross-linking agents comprising a sulfur atom such as, for example, alkylphenol-sulfur chloride condensate, sodium hexamethylene-1,6-bisthiosulfate dihydrate, and 1,6-bis(N,N'-dibenzylthiocarbamoyldithio)hexane, organic peroxides such as dicumyl peroxide, and the like. Examples of these vulcanizing agents other than sulfur include those manufactured by Taoka Chemical Co., Ltd., Flexsys, and LANXESS, and the like.

<<Vulcanization accelerator>>

Examples of the vulcanization accelerator include, but not particularly limited to, for example, sulfenamide-based, thiazole-based, thiuram-based, thiourea-based, guanidine-based, dithiocarbamate-based, aldehyde-amine-based or aldehyde-ammonia-based, imidazoline-based, and xanthate-based vulcanization accelerators. Among them, sulfenamide-based vulcanization accelerators and guanidine-based vulcanization accelerators are preferable, and it is more preferable to use two of them in combination, from the viewpoint that desired effects can be obtained more appropriately.

Examples of the sulfenamide-based vulcanization accelerator include N-cyclohexyl-2-benzothiazolyl sulfenamide (CBS), N-t-butyl-2-benzothiazolyl sulfenamide (TBBS), N-oxyethylene-2-benzothiazolyl sulfenamide, N,N'-diisopropyl-2-benzothiazolyl sulfenamide, N,N-dicyclohexyl-2-benzothiazolyl sulfenamide, and the like. Examples of the thiazole-based vulcanization accelerator include 2-mercaptobenzothiazole, dibenzothiazolyl disulfide, and the like. Examples of the thiuram-based vulcanization accelerator include tetramethylthiuram monosulfide, tetramethylthiuram disulfide, tetrabenzylthiuram disulfide (TBzTD), and the like. Examples of the guanidine-based vulcanization accelerator include 1,3-diphenylguanidine (DPG), diorthotrilguanidine, orthotrilbiguanidine, and the like. These vulcanization accelerators may be used alone, or two or more thereof may be used in combination.

A content of the vulcanization accelerator when compounded based on 100 parts by mass of the rubber component is preferably 1 part by mass or more, more preferably 2 parts by mass or more. Moreover, the content of the vulcanization accelerator based on 100 parts by mass of the rubber component is preferably 8 parts by mass or less, more preferably 7 parts by mass or less, further preferably 6 parts by mass or less. When the content of the vulcanization accelerator is within the above-described ranges, breaking strength and elongation tend to be secured.

<Producing method>

(Rubber composition)

The rubber composition can be produced by a known method. For example, it can be produced by kneading each of the above-described components using a rubber kneading apparatus such as an open roll and a closed type kneader (Bunbury mixer, kneader, etc.).

The kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them. Furthermore, the base kneading step can be divided into a plurality of steps, if desired. A kneading condition is not particularly limited. Examples of kneading include, for example, in the base kneading step, a method of kneading at a discharge temperature at 150 to 170°C for 1 to 10 minutes, and in the final kneading step, a method of kneading at 70 to 110°C for 1 to 5 minutes.

(Tire)

The tire of the present invention can be produced by a usual method. For example, the tire can be produced by extruding an unvulcanized rubber composition obtained as described above into a shape of a tread part, attaching it together with other tire members and molding them on a tire molding machine to form an unvulcanized tire, followed by heating and pressurizing this unvulcanized tire in a vulcanizing machine. A vulcanization condition is not particularly limited. Examples of vulcanization include, for example, a method of vulcanizing at 150 to 200°C for 10 to 30 minutes.

<Application>

The tire according to the present invention comprises a tread part formed of the above-described rubber composition, and can be used as a tire for a passenger car, a tire for a truck/bus, a run-flat tire, a tire for a two-wheeled vehicle, and the like. Moreover, it can be used as a summer tire and an all-season tire. Among them, it can be appropriately used as a tire for a passenger car from the viewpoint of the effects of the present invention. Besides, the tire for a passenger car is a tire on the premise that it is mounted on a car running on four wheels and refers to one having the maximum load capacity of 1000 kg or less. Here, the maximum load capacity is the maximum load capacity defined for each tire in a standard system including a standard, on which the tire is based, by the standard, i.e., for example, the maximum load capacity based on the load index (LI) in the JATMA standard (The Japan Automobile Tyre Manufacturers Association, Inc.), the maximum value described in the table "TIRE LOAD LIMITS AT VARIOUS COLD INFLATION PRESSURES" in TRA, and "LOAD CAPACITY" in ETRTO.

EXAMPLE

Hereinafter, the present invention will be described based on Examples, though the present invention is not limited to these Examples.
Various chemicals used in Examples and Comparative examples are collectively shown.

<Various chemicals>

SBR1: HPR850 manufactured by JSR Corporation (S-SBR, styrene content: 27.5% by mass, vinyl content: 59.0 mol%, Tg: -24°C, Mw: 200,000, non-oil-extended product)
SBR2: NipolNS522 manufactured by ZS Elastomer Co., Ltd. (S-SBR, styrene content: 39.0% by mass, vinyl content: 40.0 mol%, Tg: -25°C, Mw: 1,250,000, comprising 37.5 parts by mass of extended oil based on 100 parts by mass of a solid content)
BR: Ubepol BR (Registered Trademark) 150B manufactured by Ube Industries, Ltd. (vinyl content: 1.5 mol%, cis content: 97% by mass, Mw: 440,000)
Carbon Black: DIABLACK N220 manufactured by Mitsubishi Chemical Corporation ($N_2SA$: 115 $m^2/g$)
Silica: Ultrasil (Registered Trademark) VN3 manufactured by Evonik Degussa GmbH ($N_2SA$: 175 $m^2/g$)
Silane coupling agent: Si266 manufactured by Evonik Degussa GmbH (bis(3-triethoxysilylpropyl)disulfide)
Oil: VivaTec 400 manufactured by H&R Group (TDAE oil)
Thermoplastic Elastomer 1: DYNARON 4600P manufactured by JSR Corporation (hydrogenated styrene-based thermoplastic elastomer, styrene-ethylene/butylene-ethylene block copolymer (SEBC), styrene content: 20%)
Thermoplastic Elastomer 2: HYBRAR 5125 manufactured by Kuraray Co., Ltd. (nonhydrogenated styrene-based thermoplastic elastomer, styrene-isoprene-styrene block copolymer (SIS), styrene content: 20%)
Thermoplastic Elastomer 3: Miractran P22M manufactured by Nippon Miractran Company Limited (polyurethane-based thermoplastic elastomer)
Resin: Sylvares SA85 manufactured by Kraton Corporation (copolymer of $\alpha$-methylstyrene and styrene, softening point: 85°C)
Wax: SUNNOC N manufactured by Ouchi Shinko Chemical Industry Co., Ltd.
Antioxidant: Antigen 6C manufactured by Sumitomo Chemical Co., Ltd. (N-(1,3-dimethylbutyl)-N'-phenyl-p-phenylenediamine)
Stearic acid: Bead stearic acid "CAMELLIA" manufactured by NOF CORPORATION
Zinc oxide: Zinc oxide No. 1 manufactured by Mitsui Mining & Smelting Co., Ltd.
Sulfur: Powdered sulfur manufactured by Karuizawa Sulfur Co, Ltd.
Vulcanization accelerator 1: Nocceler NS-P manufactured by Ouchi Shinko Chemical Industry Co., Ltd. (N-(tert-butyl)-2-benzothiazolylsulfenamide)
Vulcanization accelerator 2: Nocceler D manufactured by Ouchi Shinko Chemical Industry Co., Ltd. (1,3-diphenylguanidine (DPG))

<Production of tire>

According to the compounding formulations shown in Tables, using a 1.7 L closed Banbury mixer, all chemicals other than sulfur and vulcanization accelerators were kneaded at a discharge temperature of 150°C for 5 minutes. Next, sulfur and vulcanization accelerators were added to the obtained kneaded product, and using a twin-screw open roll,

the mixture was kneaded for 4 minutes until the temperature reached 105°C to obtain an unvulcanized rubber composition. The obtained unvulcanized rubber composition was molded into a tread shape and attached together with other tire members to prepare an unvulcanized tire, which was then press-vulcanized at 170°C for 12 minutes to obtain a test tire 1 (195/65R15 91V) and a test tire 2 (195/60R15 88H).

<Evaluation>

The following tests were performed on each test tire as obtained above. The results are shown in Table 1 for the test tire 1 and in Table 2 for the test tire 2. In Table 1, Comparative example 1 is a reference Comparative example, and in Table 2, Comparative example 10 is a reference Comparative example.

(Wet grip performance)

Each test tire was mounted on four wheels of an FF passenger vehicle with a displacement of 1600 cc, and actual vehicle running was performed on a test course with a wet asphalt surface. 20 test drivers evaluated steering stability during running at 80 km/h with an integer value of 1 to 5 points, based on their feelings, for calculating a total score. The total score of the reference Comparative examples was converted into a reference value (100), and an evaluation result for each test tire was indicated as an index. The results show that the higher the numerical value is, the better the wet grip performance is.

(Ride comfort)

Each test tire was mounted on four wheels of an FF passenger vehicle with a displacement of 1600 cc, and actual vehicle running was performed on a test course with an uneven road surface. 20 test drivers evaluated ride comfort at 80 km/h with an integer value of 1 to 5 points, based on their feelings during straight running, changing lanes, and accelerating/decelerating, for calculating a total score. The total score of the reference Comparative examples was converted into a reference value (100), and an evaluation result for each test tire was indicated as an index. The results show that the higher the numerical value is, the better the ride comfort is.

Table 1

| | Example | | | | | |
|---|---|---|---|---|---|---|
| | 1 | 2 | 3 | 4 | 5 | 6 |
| Compounding (part by mass) | | | | | | |
| SBR1 | 40 | 40 | 40 | 40 | 40 | 40 |
| SBR2 | 68.75 | 68.75 | 68.75 | 68.75 | 68.75 | 68.75 |
| BR | 10 | 10 | 10 | 10 | 10 | 10 |
| Carbon black | 5 | 5 | 5 | 5 | 5 | 5 |
| Silica | 80 | 80 | 80 | 80 | 80 | 80 |
| Silane coupling agent | 6 | 6 | 6 | 6 | 6 | 6 |
| Oil | 5 | 5 | 5 | 5 | 5 | 5 |
| Thermoplastic elastomer 1 | 10 | 5 | 25 | 10 | - | - |
| Thermoplastic elastomer 2 | - | - | - | - | 10 | - |
| Thermoplastic elastomer 3 | - | - | - | - | - | 10 |
| Resin | 5 | 5 | 5 | 5 | 5 | 5 |
| Wax | 1 | 1 | 1 | 1 | 1 | 1 |
| Antioxidant | 2 | 2 | 2 | 2 | 2 | 2 |
| Stearic acid | 2 | 2 | 2 | 2 | 2 | 2 |
| Zinc oxide | 2 | 2 | 2 | 2 | 2 | 2 |
| Sulfur | 1 | 1 | 1 | 1 | 1 | 1 |
| Vulcanization accelerator 1 | 2 | 2 | 2 | 2 | 2 | 2 |
| Vulcanization accelerator 2 | 2 | 2 | 2 | 2 | 2 | 2 |
| T in Inequality (1) | 7.5 | 7.5 | 7.5 | 7 | 7.5 | 7.5 |
| S in Inequality (4) | 3 | 3 | 3 | 2 | 3 | 3 |
| S/T in Inequality (2) | 0.4 | 0.4 | 0.4 | 0.29 | 0.4 | 0.4 |
| G/WL in Inequality (3) | 0.011 | 0.011 | 0.011 | 0.009 | 0.011 | 0.011 |
| Evaluation | | | | | | |

- continued -

- continued -

| | Example | | | | | |
|---|---|---|---|---|---|---|
| | 1 | 2 | 3 | 4 | 5 | 6 |
| Wet grip performance | 106 | 97 | 115 | 106 | 104 | 105 |
| Ride comfort | 106 | 101 | 110 | 101 | 105 | 104 |

- continued -

| | Comparative example | | | | | | | | |
|---|---|---|---|---|---|---|---|---|---|
| | 1 | 2 | 3 | 4 | 5 | 6 | 7 | 8 | 9 |
| Compounding (part by mass) | | | | | | | | | |
| SBR1 | 40 | 40 | 40 | 60 | 60 | 60 | 60 | 60 | 40 |
| SBR2 | 68.75 | 68.75 | 68.75 | 41.25 | 41.25 | 41.25 | 41.25 | 41.25 | 68.75 |
| BR | 10 | 10 | 10 | 10 | 10 | 10 | 10 | 10 | 10 |
| Carbon black | 5 | 5 | 5 | 5 | 5 | 5 | 5 | 5 | 5 |
| Silica | 80 | 80 | 80 | 80 | 80 | 80 | 80 | 80 | 80 |
| Silane coupling agent | 6 | 6 | 6 | 6 | 6 | 6 | 6 | 6 | 6 |
| Oil | 5 | 5 | 5 | 12.5 | 12.5 | 12.5 | 12.5 | 12.5 | 5 |
| Thermoplastic elastomer 1 | 25 | - | - | - | - | - | - | 10 | 5 |
| Thermoplastic elastomer 2 | - | - | - | - | - | - | - | - | - |
| Thermoplastic elastomer 3 | - | - | - | - | - | - | - | - | - |
| Resin | 5 | 5 | 5 | 5 | 5 | 5 | 5 | 5 | 5 |
| Wax | 1 | 1 | 1 | 1 | 1 | 1 | 1 | 1 | 1 |
| Antioxidant | 2 | 2 | 2 | 2 | 2 | 2 | 2 | 2 | 2 |
| Stearic acid | 2 | 2 | 2 | 2 | 2 | 2 | 2 | 2 | 2 |
| Zinc oxide | 2 | 2 | 2 | 2 | 2 | 2 | 2 | 2 | 2 |
| Sulfur | 1 | 1 | 1 | 1 | 1 | 1 | 1 | 1 | 1 |
| Vulcanization accelerator 1 | 2 | 2 | 2 | 2 | 2 | 2 | 2 | 2 | 2 |
| Vulcanization accelerator 2 | 2 | 2 | 2 | 2 | 2 | 2 | 2 | 2 | 2 |
| T in Inequality (1) | 8.7 | 7.5 | 8.7 | 8.7 | 8.7 | 8.6 | 7.5 | 8.7 | 8.7 |
| S in Inequality (4) | 4.5 | 3 | 4.5 | 4.5 | 4.5 | 3 | 3 | 4.5 | 4.5 |
| S/T in Inequality (2) | 0.52 | 0.4 | 0.52 | 0.52 | 0.52 | 0.35 | 0.4 | 0.52 | 0.52 |
| G/WL in Inequality (3) | 0.015 | 0.011 | 0.015 | 0.015 | 0.012 | 0.012 | 0.012 | 0.012 | 0.015 |
| Evaluation | | | | | | | | | |
| Wet grip performance | 100 | 91 | 96 | 88 | 86 | 87 | 89 | 97 | 96 |
| Ride comfort | 100 | 95 | 97 | 92 | 94 | 93 | 94 | 96 | 94 |

Table 2

| | Example | | | | | |
|---|---|---|---|---|---|---|
| | 7 | 8 | 9 | 10 | 11 | 12 |
| Compounding (part by mass) | | | | | | |
| SBR1 | 40 | 40 | 40 | 40 | 40 | 40 |
| SBR2 | 68.75 | 68.75 | 68.75 | 68.75 | 68.75 | 68.75 |
| BR | 10 | 10 | 10 | 10 | 10 | 10 |
| Carbon black | 10 | 10 | 10 | 10 | 10 | 10 |
| Silica | 85 | 85 | 85 | 85 | 85 | 85 |
| Silane coupling agent | 6 | 6 | 6 | 6 | 6 | 6 |
| Oil | 7 | 7 | 7 | 7 | 7 | 7 |
| Thermoplastic elastomer 1 | 10 | 5 | 25 | 10 | - | - |
| Thermoplastic elastomer 2 | - | - | - | - | 10 | - |
| Thermoplastic elastomer 3 | - | - | - | - | - | 10 |
| Resin | 7 | 7 | 7 | 7 | 7 | 7 |
| Wax | 1 | 1 | 1 | 1 | 1 | 1 |
| Antioxidant | 2 | 2 | 2 | 2 | 2 | 2 |
| Stearic acid | 2 | 2 | 2 | 2 | 2 | 2 |
| Zinc oxide | 2 | 2 | 2 | 2 | 2 | 2 |
| Sulfur | 1 | 1 | 1 | 1 | 1 | 1 |
| Vulcanization accelerator 1 | 2 | 2 | 2 | 2 | 2 | 2 |
| Vulcanization accelerator 2 | 2 | 2 | 2 | 2 | 2 | 2 |
| T in Inequality (1) | 7.5 | 7.5 | 7.5 | 7 | 7.5 | 7.5 |
| S in Inequality (4) | 2.8 | 2.8 | 2.8 | 2 | 2.8 | 2.8 |
| S/T in Inequality (2) | 0.37 | 0.37 | 0.37 | 0.29 | 0.37 | 0.37 |
| G/WL in Inequality (3) | 0.011 | 0.011 | 0.011 | 0.009 | 0.011 | 0.011 |
| Evaluation | | | | | | |

- continued -

- continued -

| | Example | | | | | |
| --- | --- | --- | --- | --- | --- | --- |
| | 7 | 8 | 9 | 10 | 11 | 12 |
| Wet grip performance | 106 | 97 | 114 | 105 | 106 | 105 |
| Ride comfort | 105 | 101 | 110 | 101 | 104 | 105 |

- continued -

| | Comparative example | | | | | | | | |
|---|---|---|---|---|---|---|---|---|---|
| | 10 | 11 | 12 | 13 | 14 | 15 | 16 | 17 | 18 |
| Compounding (part by mass) | | | | | | | | | |
| SBR1 | 40 | 40 | 40 | 60 | 60 | 60 | 60 | 60 | 40 |
| SBR2 | 68.75 | 68.75 | 68.75 | 41.25 | 41.25 | 41.25 | 41.25 | 41.25 | 68.75 |
| BR | 10 | 10 | 10 | 10 | 10 | 10 | 10 | 10 | 10 |
| Carbon black | 10 | 10 | 10 | 10 | 10 | 10 | 10 | 10 | 10 |
| Silica | 85 | 85 | 85 | 85 | 85 | 85 | 85 | 85 | 85 |
| Silane coupling agent | 6 | 6 | 6 | 6 | 6 | 6 | 6 | 6 | 6 |
| Oil | 7 | 7 | 7 | 14.5 | 14.5 | 14.5 | 14.5 | 14.5 | 7 |
| Thermoplastic elastomer 1 | 25 | - | - | - | - | - | - | 10 | 5 |
| Thermoplastic elastomer 2 | - | - | - | - | - | - | - | - | - |
| Thermoplastic elastomer 3 | - | - | - | - | - | - | - | - | - |
| Resin | 7 | 7 | 7 | 7 | 7 | 7 | 7 | 7 | 7 |
| Wax | 1 | 1 | 1 | 1 | 1 | 1 | 1 | 1 | 1 |
| Antioxidant | 2 | 2 | 2 | 2 | 2 | 2 | 2 | 2 | 2 |
| Stearic acid | 2 | 2 | 2 | 2 | 2 | 2 | 2 | 2 | 2 |
| Zinc oxide | 2 | 2 | 2 | 2 | 2 | 2 | 2 | 2 | 2 |
| Sulfur | 1 | 1 | 1 | 1 | 1 | 1 | 1 | 1 | 1 |
| Vulcanization accelerator 1 | 2 | 2 | 2 | 2 | 2 | 2 | 2 | 2 | 2 |
| Vulcanization accelerator 2 | 2 | 2 | 2 | 2 | 2 | 2 | 2 | 2 | 2 |
| T in Inequality (1) | 8.6 | 7.5 | 8.6 | 8.6 | 8.6 | 8.6 | 7.5 | 8.6 | 8.6 |
| S in Inequality (4) | 4.4 | 2.9 | 4.4 | 4.4 | 4.4 | 2.8 | 2.8 | 4.4 | 4.4 |
| S/T in Inequality (2) | 0.51 | 0.39 | 0.51 | 0.51 | 0.51 | 0.33 | 0.37 | 0.51 | 0.51 |
| G/WL in Inequality (3) | 0.015 | 0.011 | 0.015 | 0.015 | 0.012 | 0.012 | 0.012 | 0.012 | 0.015 |
| Evaluation | | | | | | | | | |
| Wet grip performance | 100 | 93 | 97 | 89 | 88 | 87 | 91 | 99 | 98 |
| Ride comfort | 100 | 96 | 96 | 92 | 94 | 92 | 94 | 95 | 95 |

(Consideration)

From the results above, it can be found that the tire of the present invention has improved ride comfort. Moreover, in the preferred embodiment of the tire of the present invention, wet grip performance is also achieved.

<Embodiments>

Examples of embodiments of the present invention are shown below.

[1] A tire comprising a tread part and a sidewall part,

wherein, when a thickness of a tread rubber of the tread part at a tire equator is defined as T (mm), a thickness of a sidewall rubber of the sidewall part at a tire maximum width position is defined as S (mm), a tire weight is defined as G (kg), and the maximum load capacity of the tire is defined as WL (kg), T, S, G, and WL satisfy the following inequality (1) to (3) (provided that the right side of the inequality (1) is preferably 8.0, more preferably 7.8, further preferably 7.6, further preferably 7.5, further preferably 7.2, the right side of the inequality (2) is preferably 0.45, more preferably 0.40, further preferably 0.35, further preferably 0.33, further preferably 0.30, and the right side of the inequality (3) is preferably 0.011, more preferably 0.010, further preferably 0..009), and wherein a rubber composition of the tread rubber comprises less than 100 parts by mass of a thermoplastic elastomer based on 100 parts by mass of a rubber component:

$$\text{Inequality (1): } T \leq 8.5$$

$$\text{Inequality (2): } S/T < 0.50$$

$$\text{Inequality (3): } G/WL \leq 0.012$$

[2] The tire of [1] above, wherein the thermoplastic elastomer comprises a styrene-based thermoplastic elastomer.
[3] The tire of [1] above, wherein the thermoplastic elastomer comprises a hydrogenated styrene-based thermoplastic elastomer.
[4] The tire of any one of [1] to [3] above, wherein a content of the thermoplastic elastomer is 10 parts by mass or more, preferably 15 parts by mass or more, more preferably 20 parts by mass or more, further preferably 25 parts by mass or more, based on 100 parts by mass of the rubber component.
[5] The tire of any one of [1] to [4] above, wherein the S satisfies the following inequality (4) (provided that the right side of the inequality (4) is preferably 2.9, more preferably 2.8, further preferably 2.7, further preferably 2.6, further preferably 2.5):

$$\text{Inequality (4): } S \leq 3.0$$

[6] The tire of any one of [1] to [5] above, wherein the rubber composition comprises 200 parts by mass or less, preferably 150 parts by mass or less, more preferably 120 parts by mass or less, further preferably 100 parts by mass or less, further preferably 80 parts by mass or less of silica.
[7] The tire of any one of [1] to [6] above, wherein the rubber composition comprises 40 parts by mass or less, preferably 30 parts by mass or less, more preferably 20 parts by mass or less, further preferably 5 parts by mass or less of carbon black.
[8] The tire of any one of [1] to [7] above, wherein the rubber composition comprises 200 parts by mass or less, preferably 150 parts by mass or less, more preferably 120 parts by mass or less, further preferably 100 parts by mass or less, further preferably 85 parts by mass or less of a reinforcing filler.
[9] The tire of any one of [1] to [8] above, wherein the rubber composition comprises 50 parts by mass or less, preferably 40 parts by mass or less, more preferably 30 parts by mass or less, further preferably 24 parts by mass or less of oil.
[10] The tire of any one of [1] to [9] above, wherein the rubber composition comprises 30 parts by mass or less, preferably 20 parts by mass or less, more preferably 10 parts by mass or less, further preferably 5 parts by mass or less of resin.

[11] The tire of any one of [1] to [10] above, wherein the rubber composition comprises 100 parts by mass or less, preferably 90 parts by mass or less, more preferably 80 parts by mass or less, further preferably 70 parts by mass or less, further preferably 60 parts by mass or less, further preferably 29 parts by mass or less of a plasticizing agent.
[12] The tire of any one of [1] to [11] above, wherein the tire is a tire for a passenger car.

In a preferred embodiment, the tire of the present invention not only has an excellent ride comfort, but also achieves wet grip performance.

REFERENCE SIGNS LIST

| | |
|---|---|
| 1. | Tire |
| 2. | Tread part |
| 21. | Tread rubber |
| 3. | Sidewall part |
| 31. | Sidewall rubber |
| 4. | Bead part |
| 41. | Bead core |
| 5. | Carcass |
| 6. | Belt layer |
| 61. | Belt ply |
| 62. | Belt ply |
| R. | Rim |
| CL. | Tire equator |
| PT. | Point on tread surface plane intersecting with tire equator in tire cross section |
| PS. | Point on sidewall at tire maximum width position in tire cross section |
| T. | Thickness of tread rubber at tire equator |
| S. | Thickness of sidewall rubber at tire maximum width position |
| Wt. | Tire cross-sectional width |
| Ht. | Tire cross-sectional height |
| Dt. | Tire outer diameter |

## Claims

**1.** A tire comprising a tread part and a sidewall part,

wherein, when a thickness of a tread rubber of the tread part at a tire equator is defined as T (mm), a thickness of a sidewall rubber of the sidewall part at a tire maximum width position is defined as S (mm), a tire weight is defined as G (kg), and a maximum load capacity of the tire is defined as WL (kg), T, S, G, and WL satisfy the following inequality (1) to (3), and
wherein a rubber composition of the tread rubber comprises less than 100 parts by mass of a thermoplastic elastomer based on 100 parts by mass of a rubber component:

$$\text{Inequality (1): } T \leq 8.5$$

$$\text{Inequality (2): } S/T < 0.50$$

$$\text{Inequality (3): } G/WL \leq 0.012$$

**2.** The tire of claim 1, wherein the thermoplastic elastomer comprises a styrene-based thermoplastic elastomer.

**3.** The tire of claim 1, wherein the thermoplastic elastomer comprises a hydrogenated styrene-based thermoplastic elastomer.

**4.** The tire of any one of claims 1 to 3, wherein a content of the thermoplastic elastomer is 10 parts by mass or more based on 100 parts by mass of the rubber component.

**5.** The tire of any one of claims 1 to 4, wherein the S satisfies the following inequality (4):

$$\text{Inequality (4): } S \leq 3.0$$

**6.** The tire of any one of claims 1 to 5, wherein the rubber composition comprises 80 parts by mass or less of silica.

**7.** The tire of any one of claims 1 to 6, wherein the rubber composition comprises 5 parts by mass or less of carbon black.

**8.** The tire of any one of claims 1 to 7, wherein the rubber composition comprises 85 parts by mass or less of a reinforcing filler.

**9.** The tire of any one of claims 1 to 8, wherein the rubber composition comprises 24 parts by mass or less of oil.

**10.** The tire of any one of claims 1 to 9, wherein the rubber composition comprises 5 parts by mass or less of resin.

**11.** The tire of any one of claims 1 to 10, wherein the rubber composition comprises 29 parts by mass or less of a plasticizing agent.

**12.** The tire of any one of claims 1 to 11, wherein the tire is a tire for a passenger car.

FIG. 1

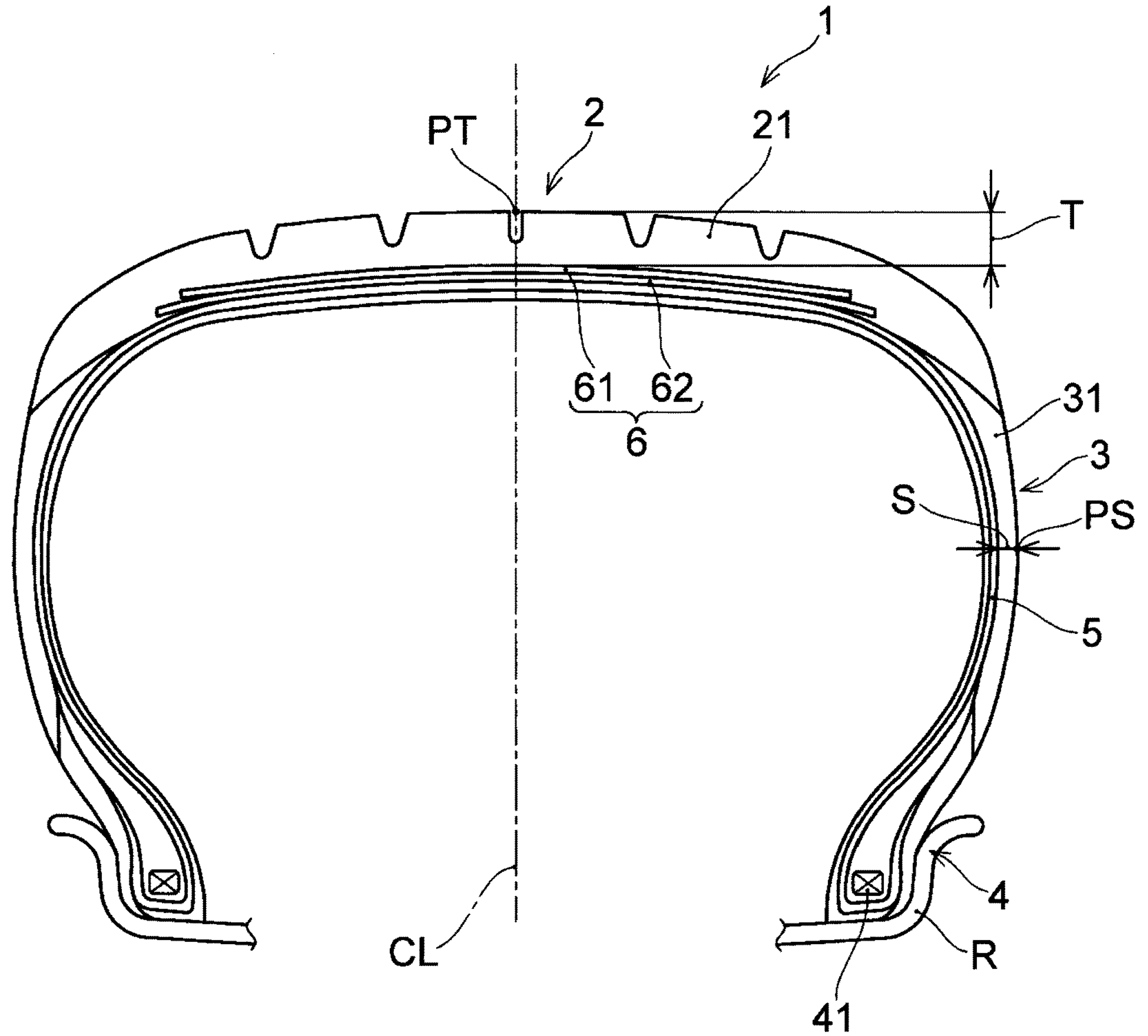

FIG. 2

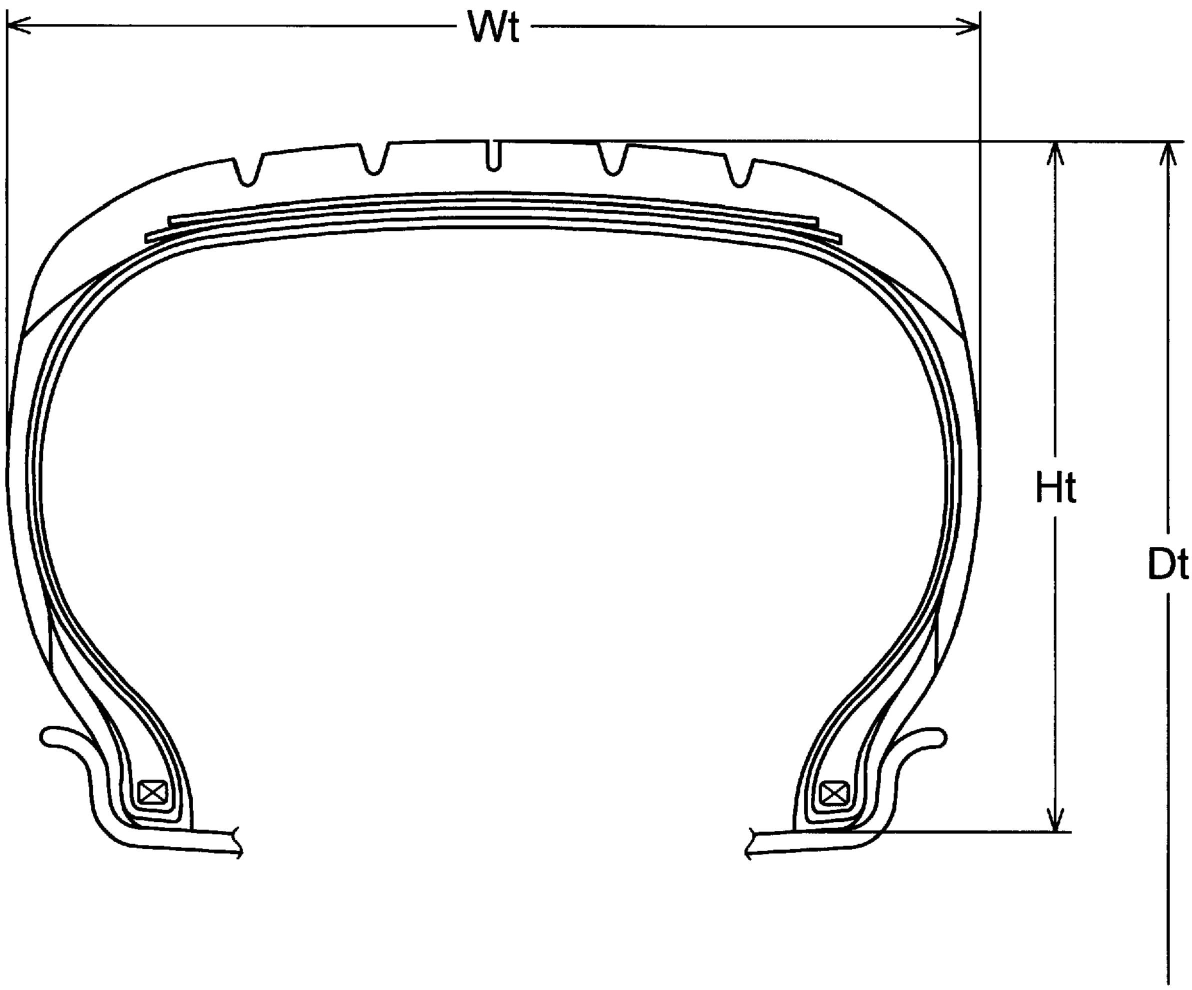

Europäisches Patentamt
European Patent Office
Office européen des brevets

# EUROPEAN SEARCH REPORT

Application Number
EP 22 18 3745

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2012/309865 A1 (LOPEZ BEATRICE [FR] ET AL) 6 December 2012 (2012-12-06)<br>* claims 1-15; tables 1,2 *<br>----- | 1-12 | INV.<br>C08L9/00<br>B60C1/00<br>C08L9/06<br>C08L53/02<br>C08L75/04<br>B60C11/00 |
| A | EP 0 470 693 A2 (BRIDGESTONE CORP [JP]) 12 February 1992 (1992-02-12)<br>* claims 1-5; tables 1-4b *<br>----- | 1-12 | |
| A | WO 2019/154791 A1 (APOLLO TYRES GLOBAL R & D BV [NL]) 15 August 2019 (2019-08-15)<br>* page 8 - page 10; claims 1-15 *<br>----- | 1-12 | |
| A | US 2017/313130 A1 (CHOUVEL CHRISTOPHE [FR] ET AL) 2 November 2017 (2017-11-02)<br>* claims 19-62; tables 1-3 *<br>----- | 1-12 | |
| A | US 2018/171120 A1 (YURI TAKASHI [JP]) 21 June 2018 (2018-06-21)<br>* claims 1-4; examples 1,2 *<br>----- | 1-12 | |

TECHNICAL FIELDS SEARCHED (IPC)

C08L
B60C

The present search report has been drawn up for all claims

1

| Place of search | Date of completion of the search | Examiner |
|---|---|---|
| Munich | 20 February 2023 | Barker, Stephan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 22 18 3745

This annex lists the patent family members relating to the patent documents cited in the above-mentioned European search report. The members are as contained in the European Patent Office EDP file on
The European Patent Office is in no way liable for these particulars which are merely given for the purpose of information.

20-02-2023

| Patent document cited in search report | Publication date | Patent family member(s) | Publication date |
|---|---|---|---|
| US 2012309865 A1 | 06-12-2012 | CN 102770284 A | 07-11-2012 |
| | | EP 2501558 A1 | 26-09-2012 |
| | | FR 2952644 A1 | 20-05-2011 |
| | | JP 5687281 B2 | 18-03-2015 |
| | | JP 2013510939 A | 28-03-2013 |
| | | US 2012309865 A1 | 06-12-2012 |
| | | WO 2011061145 A1 | 26-05-2011 |
| EP 0470693 A2 | 12-02-1992 | DE 69116468 T2 | 01-08-1996 |
| | | EP 0470693 A2 | 12-02-1992 |
| | | ES 2084772 T3 | 16-05-1996 |
| | | US 5204407 A | 20-04-1993 |
| WO 2019154791 A1 | 15-08-2019 | EP 3749531 A1 | 16-12-2020 |
| | | WO 2019154791 A1 | 15-08-2019 |
| US 2017313130 A1 | 02-11-2017 | CN 106661279 A | 10-05-2017 |
| | | EP 3160759 A1 | 03-05-2017 |
| | | FR 3022912 A1 | 01-01-2016 |
| | | JP 6619808 B2 | 11-12-2019 |
| | | JP 2017528580 A | 28-09-2017 |
| | | US 2017313130 A1 | 02-11-2017 |
| | | WO 2016001094 A1 | 07-01-2016 |
| US 2018171120 A1 | 21-06-2018 | CN 108219347 A | 29-06-2018 |
| | | DE 102017127811 A1 | 21-06-2018 |
| | | JP 2018095762 A | 21-06-2018 |
| | | US 2018171120 A1 | 21-06-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017043281 A